# EUROPEAN PATENT SPECIFICATION

(11) **EP 0 579 485 B1**
(45) Date of publication and mention of the grant of the patent: **03.01.1996**
(21) Application number: 93305501.4
(22) Date of filing: 14.07.1993
(51) Int. Cl.: C09K 5/04

(54) **Refrigerant composition**
Kühlzusammensetzung
Composition réfrigérante

(30) Priority: 14.07.1992 KR 1249192; 28.05.1993 GB 9311127
(43) Date of publication of application: 19.01.1994
(73) Proprietor: Oho, Suk Jae, Kwangmyeong City, Kyeonggi-do (KR); Chung, Yang Soo, Buk-gu, Inchon City (KR); Abe, Kozo, Nagoya, Aichigen (JP)
(72) Inventor: Oho, Suk Jae, 202, Ra-dong, Kwangmyeong City, Kyeonggi-do (KR)
(74) Representative: Waldren, Robin Michael

(56) References cited:
- EP-A- 0 081 645
- EP-A- 0 369 827
- DATABASE WPI Week 9038, Derwent Publications Ltd., London, GB; AN 90-288637 & SU-A-1 545 046 (AKULOV)
- DATABASE WPI Week 8539, Derwent Publications Ltd., London, GB; AN 85-241546 & SU-A-1 143 950 (NALETOV)

## Description

The present invention relates to a refrigerant composition which includes liquified nitrogen, a multivalent alcohol, an aqueous solution of sodium chloride, and a surfactant, and which is for use in vapor compressing type freezers and the like.

A freezer performs mechanical works to bring down the temperature of a sealed vessel relative the ambient temperature, thus absorbing the heat from the vessel, or pumping heat from the lower temperature region to a higher temperature region to serve as a heat pump. In this freezer, a medium which carries heat from a lower temperature region to a higher temperature region is called refrigerant.

As the refrigerant for vapor compressing type freezer, there are ammonia (NH₃), and freon gas of fluoro-chloro hydrocarbon series (R11: CCl₃F, R-12: CCl₂F₂, R-22: CHClF₂, R-500: CCl₂F₂/CH₃CHF₃, R-502: CHClF₂/CClF₂CF₃, R-503: CHF₃/CClF₃, R-504: CH₂F₂/CF₃CClF₂, R-1130: C₂H₂Cl₂, R-160: C₂H₅Cl, R-40: C₂H₄O₂, R-764: SO₂). The above refrigerants are selectively used for different purposes such as the freezing capability, the type of the freezer, the field of the application and the like. However, this refrigerants produces severe stimulating odors which give a harmful effect to the human respiratory system, thereby making them unreliable in their safety. When these refrigerants are evaporated into the air, if their level is 50 ppm, their existence can be recognized by their odor, while if their level reaches 750 ppm, they give toxic effect to the eyes or respiratory system. If the refrigerant level in the air is 1%, it becomes fatal to the humans, and, after an exposure of 30 minutes under such condition, the humans will lose the consciousness.

Further, under a slight moisture, brass and bronze are corroded by them, while iron and steel are not corroded. Although the refrigerant of CFC series had been recognized as safe, professor F. S. Rowland et al reported in 1974 that, if the CFC refrigerant is released into the air, most of it reach the stratosphere without being decomposed, and there, the refrigerant is decomposed by ultraviolet rays to produce chlorine atoms which destroy the ozonic layer.

As a result, ultraviolet rays reach the ground of the earth in a greater amount to increase the dermatic cancer, and to adversely affect the ecosystem. From the report, the argument on the matter was further spread.

Many countries in the world began to regulate the use of the refrigerant of CFC series, and a protocol on the ozonic layer destroying material was adopted at the conference of 1987 in Montreal of Canada, the protocol being signed by 23 countries including the United states, Japan, Canada, and EC. The protocol regulated the use of R-11, R-12, R-114 and R-115 as aerosol, refrigerant and foaming materials, R-113 as detergent and dissolving medium, and 1211 and 1301 as halogen for gastro-intestinal medicine.

However, in 1990 conference, the regulation was further strengthened, to such a degree that its production was to be completely prohibited by the year 2000. The ozonic layer can be regenerated through the natural process, but the ozonic layer which is destroyed by the chlorine atoms of the refrigerant of CFC series can scarcely be compensated by only the natural process.

The refrigerant diffused in the air cause the so called hothouse effect in which the visible light pass through the air, but the heat dissipation from the earth is blocked, thereby raising the average temperature of the earth. This in turn causes the raising of the temperature of the seas and the confusions of the weather, producing typhoons, draught and extension of rainy seasons. Further, as a result of the hothouse effect, the ice layers of the north and south poles of the earth are melted to heighten the sea level, with the result that the coastal regions are submerged, and the agricultural productions are adversely effected, thereby aggravating the environmental problem. Thus the use of the refrigerant of CFC series was regulated, and a need for a substitution of it came to be felt.

On this occasion, the present inventor came to study on the refrigerant which is to be used on freezers and air conditioners, and invented a non-azotropically mixed refrigerant. Particularly, the non-azotropically mixed refrigerant is different in its phase equilibrium temperatures relative to the ambient temperatures of the condenser and evaporator as the heat radiating source and as the heat absorbing source, thereby improving the efficiency of the freezing cycle. Further, the boiling point is properly low, the evaporating point of the refrigerant is large, and the condensating pressure is properly low. Further the specific volume of the vapor is small, the temperature of the discharge gas of the compressor is low, and the threshold temperature is sufficiently high. Further, there is no corroding effect, the safety is high, pollution and contaminations are not caused, and the price is low.

The present invention is invented based on the above background.

Therefore, it is the object of the present invention to provide a refrigerant composition which substitutes the refrigerant of CFC series, and which can be used on vapor compressing type refrigerators, freezers, industrial freezers and automobile air conditioners.

The present invention now provides a refrigerant composition for use in freezers and the like, the composition comprising:
from 50% to 70% by weight of liquified nitrogen, a mixture of propylene glycol and ethylene glycol, an aqueous solution of sodium chloride and from 10% to 5% by weight of a phosphoric acid ester surfactant.

The refrigerant composition of the present invention is prepared in the following manner.
a. Liquified nitrogen is injected into a reaction tank.
b. The propylene glycol and ethylene glycol are added, and the mixture is agitated, thereby forming a first composition.
c. An aqueous solution of sodium chloride and the phosphoric acid ester surfactant is added into the first composition.

The amount of propylene glycol may for example be 15-20 weight % and the amount of ethylene glycol may for example be 8 weight %. Also for example 2 weight % of an aqueous solution of sodium chloride may be used.

Thus, the new refrigerant of the present invention gives solutions to the problems of the ammonia and freon gas by providing a refrigerant composition which is not harmful to the humans and to the ecosystem of the earth. In this non-azotropically mixed refrigerant composition, the phase equilibrium temperature is increased.

The present invention will now be explained in more detail by way of the following non-limiting examples, and with reference to the accompanying drawings, in which:-

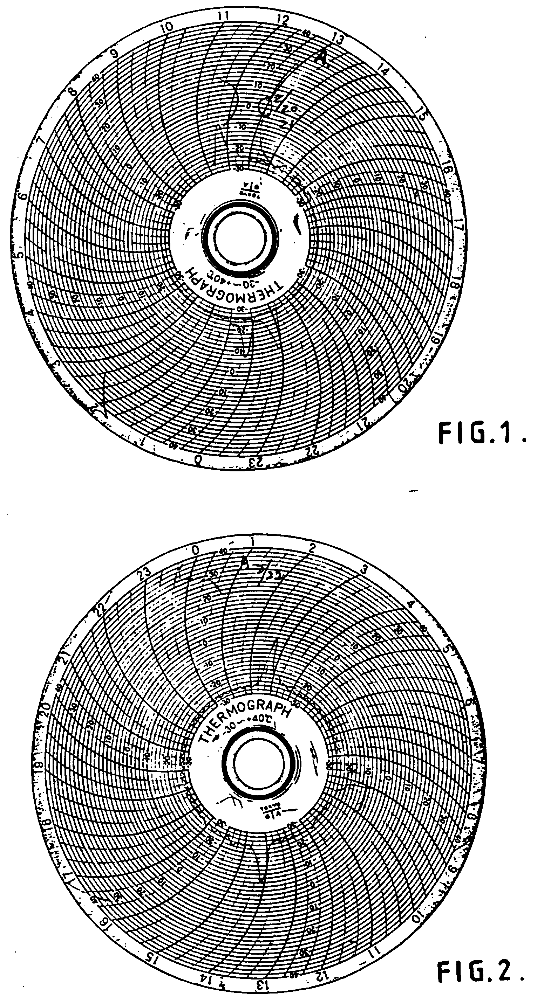

Figure 1 is a graph showing the fluctuations of the temperature of the refrigerator from 1:00 PM of February 20 to 9:00 AM of February 22.

Figure 2 is a graph showing the fluctuations of the temperature of the refrigerator from 9:00 AM of February 22 to 8:00 AM of February 23.

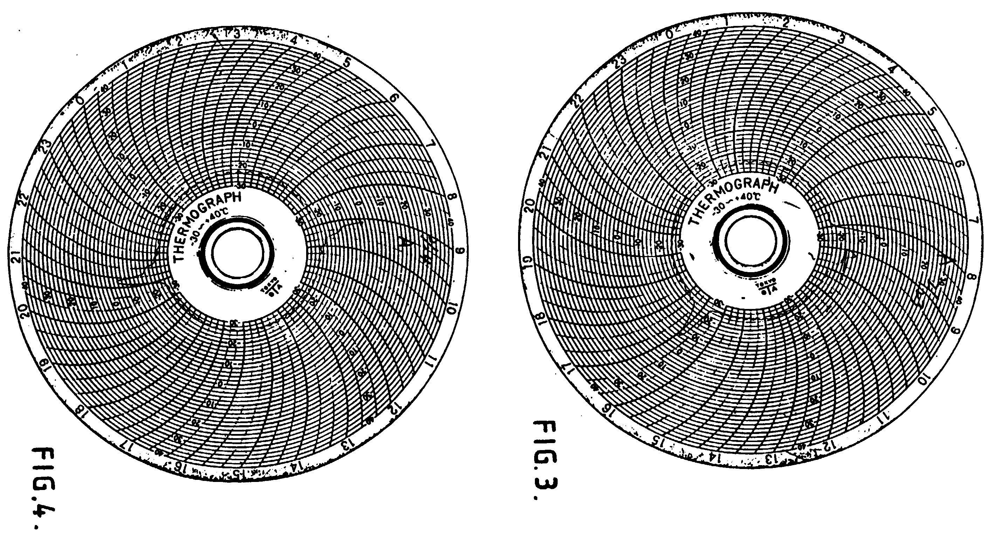

Figure 3 is a graph showing the fluctuations of the temperature of the refrigerator from 9:00 AM of February 23 to 8:20 AM of February 24.

Figure 4 is a graph showing the fluctuations of the temperature of the refrigerator from 9:10 AM of February 24 to 8:20 AM of February 25.

Figure 5 is a graph showing the fluctuations of the temperature of the refrigerator from 8:20 AM of February 25 to 7:40 AM of february 26.

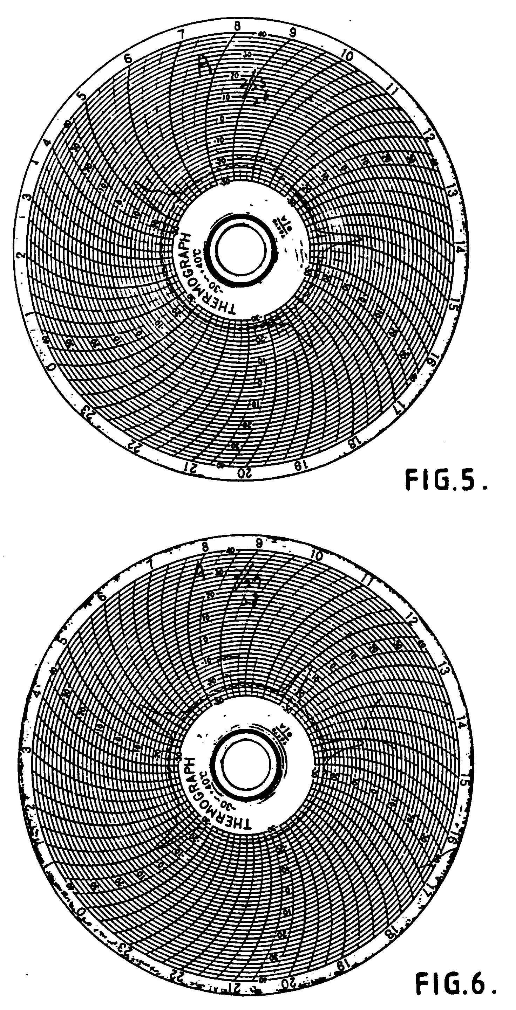

Figure 6 is a graph showing the fluctuations of the temperature of the refrigerator from 8:50 AM of February 27 to 7:20 AM of February 28.

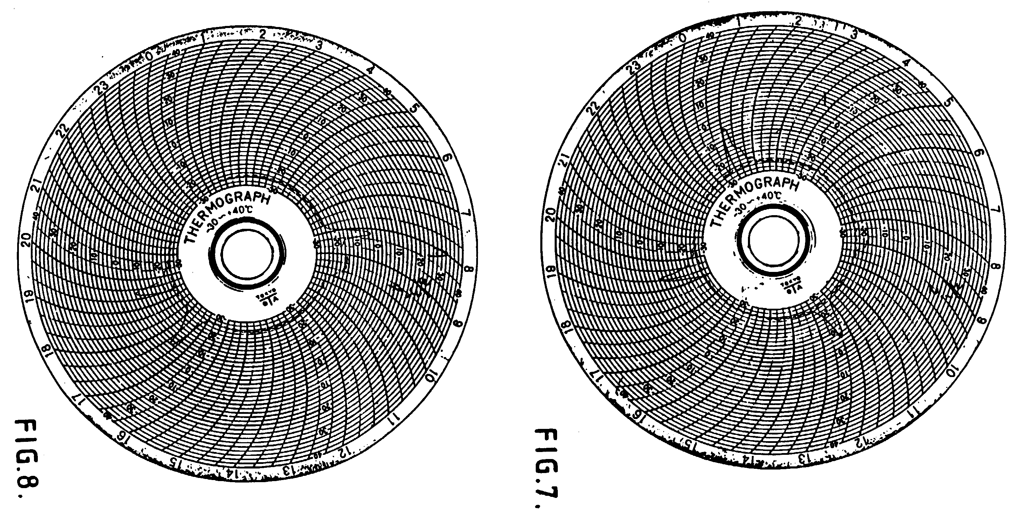

Figure 7 is a graph showing the fluctuations of the temperature of the refrigerator from 8:50 AM of March 1 to 8:00 AM of March 2.

Figure 8 is a graph showing the fluctuations of the temperature of the refrigerator from 9:00 AM of March 3 to 7:20 AM of March 4.

Figure 9 is a graph showing the fluctuations of the temperature of the refrigerator from 9:00 AM of March 5 to 7:00 AM of March 7.

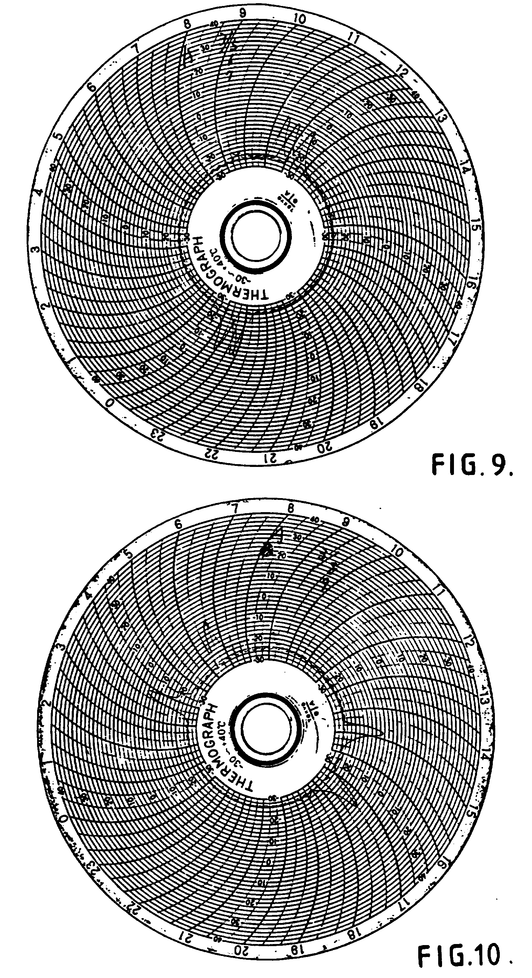

Figure 10 is a graph showing the fluctuations of the temperature of the refrigerator from 9:00 AM of March 8 to 7:20 AM of March 9.

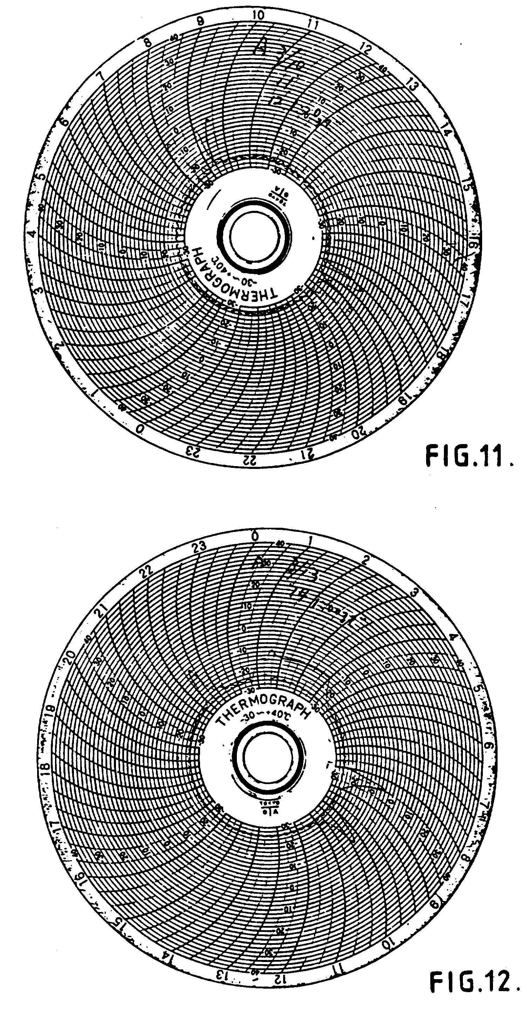

Figure 11 is a graph showing the fluctuations of the temperature of the refrigerator from 9:00 AM of March 10 to 1:20 PM of march 12.

Figure 12 is a graph showing the fluctuations of the temperature of the refrigerator from 1:00 AM of March 13 to 11:40 PM of March 14.

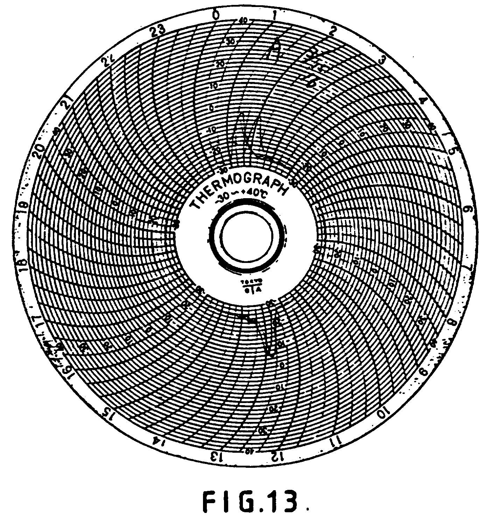

Figure 13 is a graph showing the fluctuations of the temperature of the refrigerator from 1:00 AM of March 15 to 2:30 AM of March 16.

### <Example 1>

Liquified nitrogen: 65 % (weight %)
Propylene glycol: 15-20 %
Ethylene glycol: 8 %
Aqueous solution of sodium chloride: 2 %
Surfactant (organic): 10-5 %

### <Example 2>

Liquified nitrogen: 50-70 % (weight %)
Propylene glycol: 15-20 %
Ethylene glycol: 8 %
Aqueous solution of sodium chloride: 2 %
Surfactant: 5-10 %
Water: 5-10%

The preparation processes for Examples 1 and 2 of the refrigerant composition of the present invention are as follows.

That is the process includes the following 9 steps.
(1) A reaction tank is washed by using a distilled water, and then, dried.
(2) A liquified nitrogen (LN₂) having a temperature of -195.8°C is injected into the reaction tank at the normal temperature.
(3) Propylene glycol is put into the tank, and the two materials are mixed together for a certain period of time.
(4) After the mixing and agitating, a valve of the reaction tank is opened to discharge the reaction gas from the tank.
(5) Ethylene glycol is added into the mixture, and an agitation is carried out for a certain period of time.
(6) After the agitation, the valve of the reaction tank is opened to discharge the reaction gas from the tank.
(7) Then an aqueous solution of sodium chloride (with a concentration of 2 %) is added.
(8) Then an organic surfactant such as a phosphoric ester is added, and an agitation is carried out until the foaming phenomenon is terminated.
(9) The product thus prepared is packed into sealed containers (about 3 atmospheres) in the units of 10 kg and 20 kg etc. before shipping.

The composition properties as the results of tests are shown in the following tables.

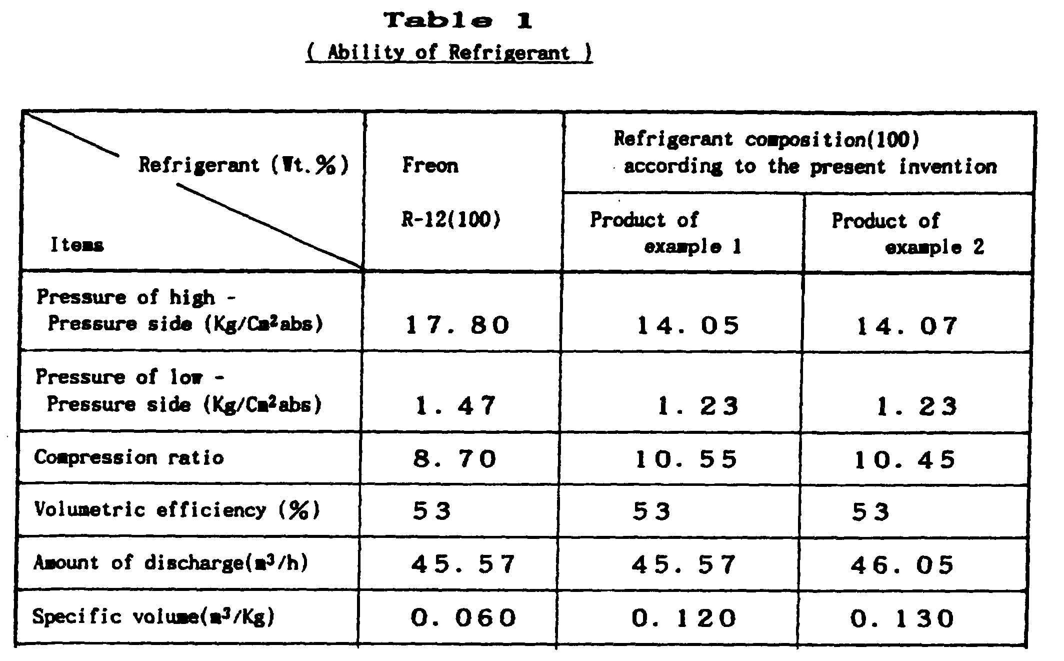

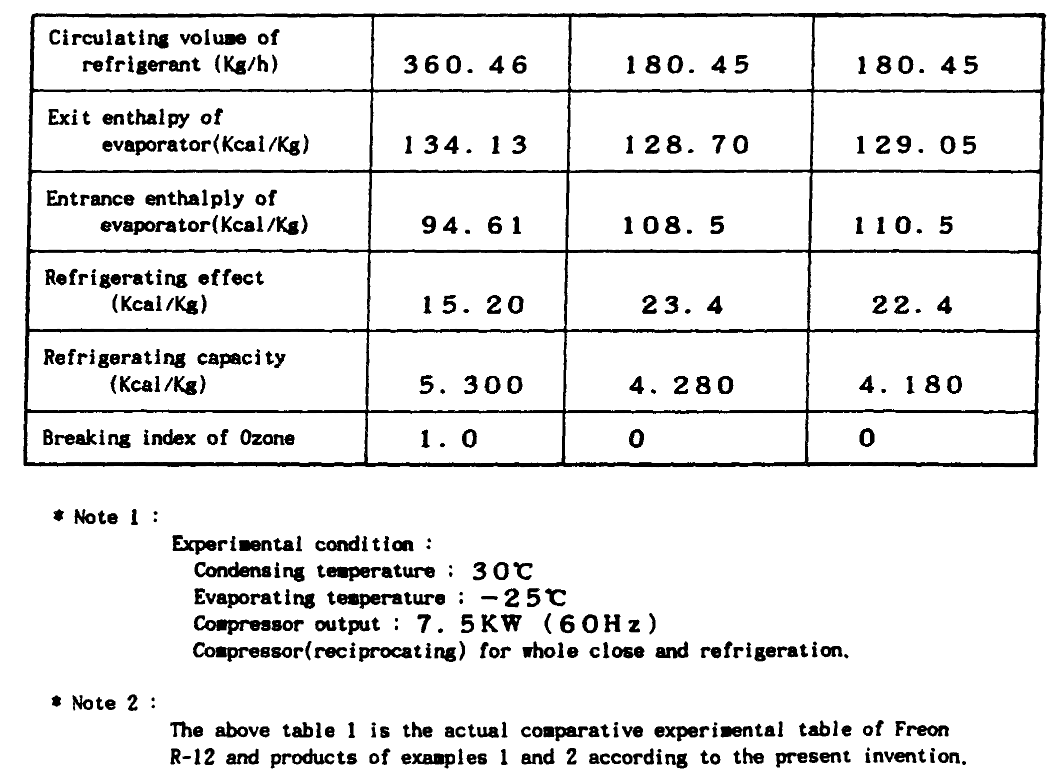

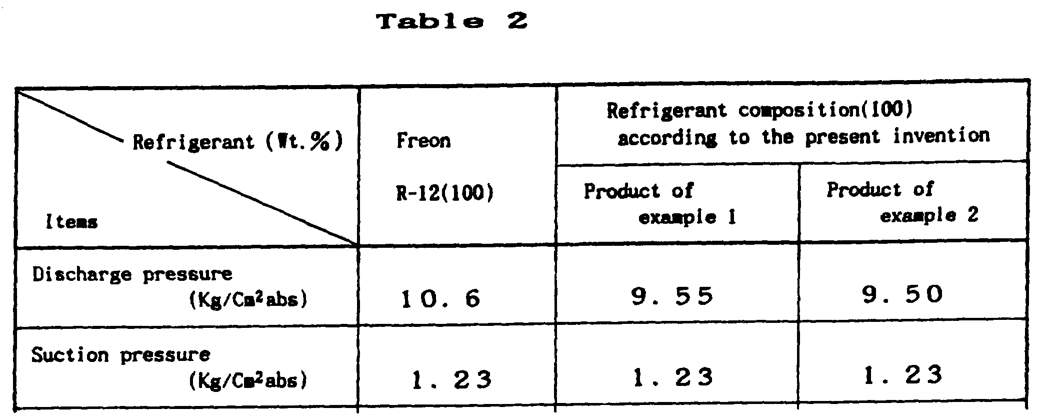

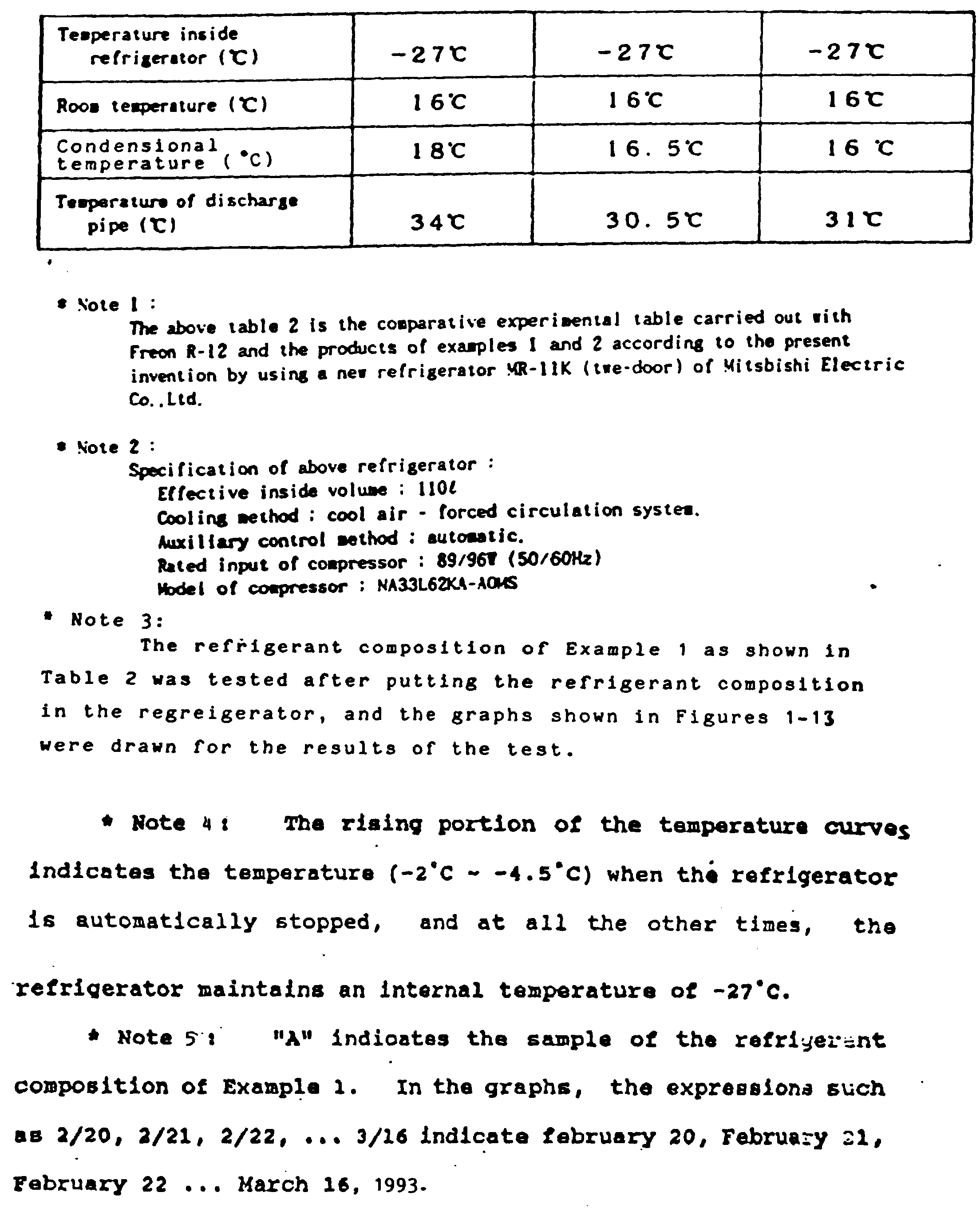

The above experimental results show that the refrigerating capacity of the refrigerant composition according to the present invention is somewhat inferior to that of the existing Freon R-12 but the refrigerant composition according to the present invention has not any problems in using it as refrigerant.

Especially, the refrigerant composition according to the present invention satisfies the following conditions which the refrigerant should have :
(a) to have a low evaporating temperature in the atmospheric pressure.
(b) to have a low condensing pressure.
(c) to heve a high evaporating latent heat.
(d) to have a low solidifying point.
(e) to have a low specific volume.
(f) to have a high critical temperature.
(g) not to react with a lubricating oil chemically.
(h) to have a low viscosity and a good electric heating action.
(i) not to be charged with electricity and also not to erode the insulating material of electricity.
(j) not to have a flashing and explosive property.

In particular, it can be said that the refrigerant composition according to the present invention is superior to HCFC-134a which is a new substitute refrigerant in that the refrigerant compositon according to the present invention can use the existing compressor and other piping structure as they are.

Namely, the refrigerant compositon according to the present invention has an advantage in which the composition can use the structure as it is without altering it.

According to the present invention as described above, the composition has characteristics such that the mixture of the surfactant and the aqueous solution of sodium chloride adheres on metallic or non-metallic objects to form a film on them so as to prevent the corrosion of the objects, as well as preventing the corrosion of the rubber hose used on the automobile air conditioner.

Further, the safety of the composition is very high, and other required conditions are sufficiently held by the composition.

## Claims

1. A refrigerant composition for use in freezers and the like, the composition comprising:
from 50% to 70% by weight of liquified nitrogen, a mixture of propylene glycol and ethylene glycol, an aqueous solution of sodium chloride and from 10% to 5% by weight of a phosphoric acid ester surfactant.

2. A refrigerant composition as claimed in claim 1, wherein propylene glycol and ethylene glycol are added in the amounts of 15-20 % by weight and 8 % by weight respectively.

3. A refrigerant composition as claimed in claim 1 or claim 2, wherein said aqueous solution of sodium chloride is added in the amount of 2 % by weight.

## Patentansprüche

1. Kühlzusammensetzung zum Einsatz in Kältemaschinen und dergleichen, wobei die Zusammensetzung aufweist:
zwischen 50 und 70 Gewichtsprozent an verflüssigtem Stickstoff, eine Mischung aus Propylenglykol und aus Ethylenglykol, eine wässerige Natriumchloridlösung sowie zwischen 10 und 5 Gewichtsprozent eines grenzflächenaktiven Phosphorsäureesters.

2. Kühlzusammensetzung nach Anspruch 1, worin das Propylenglykol und das Ethylenglykol in Mengen von beziehungsweise 15-20 Gewichtsprozent und 8 Gewichtsprozent zugesetzt werden.

3. Kühlzusammensetzung nach Anspruch 1 oder Anspruch 2, worin die wässerige Natriumchloridlösung in einer Menge von 2 Gewichtsprozent zugesetzt wird.

## Revendications

1. Composition réfrigérante destinée à l'emploi dans des réfrigérateurs et des installations semblables. la composition comprenant:
de 50% à 70% en poids d'azote liquéfié, un mélange de propylène glycol et d'éthylène glycol, une solution aqueuse de chlorure de sodium et de 10% à 5% en poids d'un ester d'acide phosphorique tensio-actif.

2. Composition réfrigérante selon la revendication 1, dans laquelle le propylène glycol et l'éthylène glycol sont ajoutés en des quantités de 15-20% en poids et de 8% en poids respectivement.

3. Composition réfrigérante selon la revendication 1 ou la revendication 2, dans laquelle ladite solution aqueuse de chlorure de sodium est ajoutée en une quantité de 2% en poids.
